# EUROPEAN PATENT SPECIFICATION

(11) **EP 1 464 146 B1**
(45) Date of publication and mention of the grant of the patent: **08.04.2009**
(21) Application number: 03729304.0
(22) Date of filing: 09.01.2003
(51) Int. Cl.: H04L 12/56

(54) **A METHOD OF AND APPARATUS FOR DIRECTING PACKET ENTITIES**
VERFAHREN UND VORRICHTUNG ZUM LENKEN VON PAKETENTITÄTEN
PROCEDE ET APPAREIL PERMETTANT DE DIRIGER DES ENTITES DE PAQUETS

(30) Priority: 09.01.2002 US 45646
(43) Date of publication of application: 06.10.2004
(73) Proprietor: Nokia Siemens Networks Oy, 02610 Espoo (FI)
(72) Inventor: TUIJA, Hurtta, 02660 Espoo (FI)
(74) Representative: Style, Kelda Camilla Karen
(86) International application number: PCT/IB2003/000409
(87) International publication number: WO 2003/058892

(56) References cited:
- WO-A1-01/89252
- WO-A1-02/01818
- GB-A- 2 341 059

## Description

### Field of the Invention

The present invention relates to a method of and apparatus for directing packet fragments in a telecommunications system.

### Background of the Invention

Telecommunications networks typically operate in accordance with a given standard or specification which sets out what the various elements of the network are permitted to do and how that should be achieved. For example, the standard or specification may define whether the user, or more precisely, user equipment or terminal is provided with circuit switched and/or packet switched service. The standard or specification may also define the communication protocols and/or parameters which shall be used for the connection. In other words, the standards and/or specifications define the "rules" on which the communication can be based. Examples of the different standards and/or specifications for wireless communication include, without limiting to these, specifications such as GSM (Global System for Mobile communications) or various GSM based systems (such as GPRS: General Packet Radio Service), AMPS (American Mobile Phone System), DAMPS (Digital AMPS), WCDMA (Wideband Code Division Multiple Access) or TD/CDMA in UMTS (Time Division / Code Division Multiple Access in Universal Mobile Telecommunications System), IMT 2000 and so on.

In a -typical wireless cellular communication system a base -station serves mobile stations or similar terminal apparatus (mobile station MS in the GSM, User Equipment UE in the UMTS) via a wireless interface. Each of the cells of the cellular system can be served by an appropriate transceiver apparatus. For example, in the WCDMA radio access network the cell is served by Node B, which is connected to and controlled by an element called as a radio network controller (RNC) node. In the GSM radio network the cell is served by a base station (BTS), which is connected to and controlled by a base station controller (BSC) node. The BSC/RNC element may be connected to and controlled by a mobile switching center (MSC), a serving GPRS support node (SGSN) or similar facility. The controllers of a network are typically interconnected and there may be one or more gateways, such as a Gateway MSC (GMSC) or a Gateway GPRS support node (GGSN), for connecting the cellular network to other networks, such as to circuit or packet switched telephone or data networks, such as the Internet or an intranet. The gateway node provides one or several access points for the network to another network, that is a connection point between the two networks.

As mentioned above, the telecommunications network may be capable of providing wireless packet switched services. Examples of such networks include the GPRS (General Packet Radio Service) network, EDGE (enhanced data rate for GSM evolution) Mobile Data Network or an appropriate third generation telecommunication system such as the CDMA (code division multiple access), WCDMA (wideband code division multiple access) or TDMA (time division multiple access) based 3^{rd} generation telecommunication systems that are sometimes referred to as Universal Mobile Telecommunication System (UMTS). All these relate to the transfer of data to and from mobile stations. For example, the GPRS standard is provided in conjunction with the GSM (Global System for Mobile communications) standard. The GSM standard is a circuit switched service and is originally designed for speech services. There are elements of the GSM standard and the GPRS standard which are in common. The GPRS networks are described in more detail e.g. in 3GPP Technical Specification 3G TS 23.060 version 3.2.0, "General Packet Radio Service (GPRS); Service description; Stage 2", January 2000. An adaptation of the GPRS standard is also being proposed for use with the third generation standard UMTS, which typically uses wideband code division multiple access. The packet data part of the UMTS is contained in the above referenced 23.060 specification, i.e. 23.060 applies for packet switched data both for the UMTS and the GPRS.

The data packets may be transferred via the network on a Packet Data Protocol (PDP) context. More particularly, PDP context refers to the part of the data connection that goes through the packet switched network (e.g. the GPRS/UMTS network). The PDP context can be seen as a logical connection from the wireless station to the access point of a gateway node, such as the GGSN, the access point being the connection point between the e.g. GPRS/UMTS mobile network and an external data network. The PDP context may also be referred to, instead of the term logical connection, as a logical association between the access point and the user.

It has been proposed to have secondary PDP contexts. The primary PDP context is the first PDP context established for a specific PDP (or IP) address. There may still be further PDP context for the same address and APN. They are called secondary PDP contexts. In the GPRS system proposed currently, a gateway node such as the GGSN has to classify downlink (that is in the direction from the base station to the user equipment) IP packets received with an IP address in order to carry those IP packets on the correct PDP context. However this proposal has the problem that the packet classification by the GGSN does not work if the packets are fragmented. This is because the GGSN uses TFT (Traffic Flow Template) information and PDP address to classify the packets. It should be appreciated that a mobile device or the like may have at most one PDP context without a TFT, whereas other PDP contexts with the same PDP address must have TFTs. The TFT includes information available in IP and transport layer, e.g. TCP or UDP, headers, e.g. source address(es), source port(s) and destination port(s).

If the downlink IP packets are fragmented, the transport header will not be available in all resulting fragments. If the GGSN were then to classify IP packets based on transport header information (i.e. if any of the PDP contexts with the PDP address includes TFT with transport header information), the GGSN may send fragments not including the transport header on a wrong PDP context.

As an example, if the mobile station has a PDP context without a TFT, a PDP context with the source port 1234 in the TFT and a PDP context with the source port 5678 in the TFT, the GGSN sends fragments without the transport header on the first PDP context, whereas the fragment including the transport header with the source port 1234 or with the source port 5678 is sent on the second or on the third PDP context depending on the source port of the transport header.

In the example above, if the mobile station does not have a PDP context without a TFT (i.e. the first PDP context), it will not receive fragments without the transport header at all.

For further information relating to a packet data transmission method and an internet protocol flow detector, the reader is directed to WO-A1-0201818 and GB-A-2341059, respectively.

### Summary of the Invention

It is an aim of the embodiments of the present invention to address one or several of the above problems.

According to a first aspect of the present invention, there is provided, a method for directing packet fragments, said method comprising the steps of:
receiving a first packet fragment;
determining that the first packet fragment is part of a packet;
checking if the first packet fragment contains information relating to the direction of said packet;
storing said information of fragment;
directing said first packet fragment in accordance with said information;
receiving a second packet fragment;
checking if the second packet fragment is part of the packet; and
forwarding said second packet fragment in accordance with said stored information.

Preferably, when said second packet fragment is received before said first packet fragment said second packet fragment is stored until said first packet fragment is received.

Preferably, said method is arranged to direct a packet fragment to a required bearer of a plurality of bearers. More preferably, said checking step comprises checking if said packet fragment contains information relating to the required bearer. Still more preferably, the information is at least one of a source address, destination address, and identification in a fragment header.

Preferably, the storing step comprises storing at least one of a source address, a destination address, and identification in a fragment header.

Preferably, the method comprises the step of storing fragmentation related information contained in said packet fragment.

Preferably, the method comprises the step of receiving another packet fragment after a packet fragment containing said direction information has been received and directing said another packet fragment in accordance with the direction information.

According to a second aspect of the present invention, there is provided a method for directing a first set of mutually related packet fragments, the first set containing a second set of mutually related packet fragments; the packet fragments of the second set containing information relating to the direction of said packet fragments; the second set of packet fragments containing at least one packet fragment, said method comprising the steps of:
receiving at least one first packet fragment;
determining that the first packet fragment belongs to the first set of mutually related packet fragments;
determining that the first packet fragment does not belong to the second set of packet fragments;
receiving at least one second packet fragment;
determining that the second packet fragment received belongs to the second set of packet fragments; and
directing said first and second packet fragments in accordance with said information contained in the second packet fragment.

Preferably, the method comprises storing the first packet fragment.

Preferably, said first packet fragment is stored until said required direction has been determined.

Preferably, when said first packet fragment has been stored for a predetermined time and said required direction has not been determined, a direction in which said first packet fragment is to be sent is selected and said first packet fragment is sent in said selected direction.

Preferably, when said first packet fragment has been stored for a predetermined time and said required direction has not been determined, said first is removed from a store.

Preferably, if a store storing said first packet fragment has more than a predetermined amount of data stored therein, a direction in which said first packet fragment is to be sent is selected and said first packet fragment is sent in said selected direction.

Preferably, if a store storing said first packet fragment has more than a predetermined amount of data stored therein said first packet fragment is removed from said store.

Preferably, information from a header of at least one packet fragment is stored. More preferably, said stored information comprises at least one of the following:
source address; destination address and identification information.

Preferably, said direction comprises a PDP context and/or one of a plurality of bearers and/or a bearer.

Preferably, said direction information comprises said destination address.

According to a third aspect of the present invention, there is provided an apparatus for directing a plurality of related packet fragments, only one or some of said packet fragments containing information relating to the direction of said packet fragments, said apparatus comprising:
means for receiving said plurality of packet fragments;
means for determining a required direction address from at least one of said packet fragments containing said information; and
means for directing said plurality of related packet fragments in the required direction.

Preferably, said apparatus is usable as a node in a packet switched network. More preferably, said network is a GPRS network.

Preferably, said apparatus is a GGSN.

According to a fourth aspect of the present invention, there is provided an apparatus for directing a first set of mutually related packet fragments, the first set containing a second set of mutually related packet fragments; the packet fragments of the second set containing information relating to the direction of said packet fragments; the second set of packet fragments containing at least one packet fragment, said apparatus comprising:
means for receiving at least one first packet fragment;
means for determining that the first packet fragment belongs to the first set of mutually related packet fragments;
means for determining that the first packet fragment does not belong to the second set of packet fragments;
means for receiving at least one second packet fragment;
means for determining that the second packet fragment received belongs to the second set of packet fragments; and
means for directing said first and second packet fragments in accordance with said information contained in the second packet fragment.

### Brief Description of Drawings

For better understanding of the present invention, and in order to show how the invention may be implemented in practice, reference will now be made by way of example only to the accompanying drawings in which:
Figure 1 shown a communication network in which the embodiments of the present invention may be used; and
Figure 2 shows an packet divided into fragment packets; and

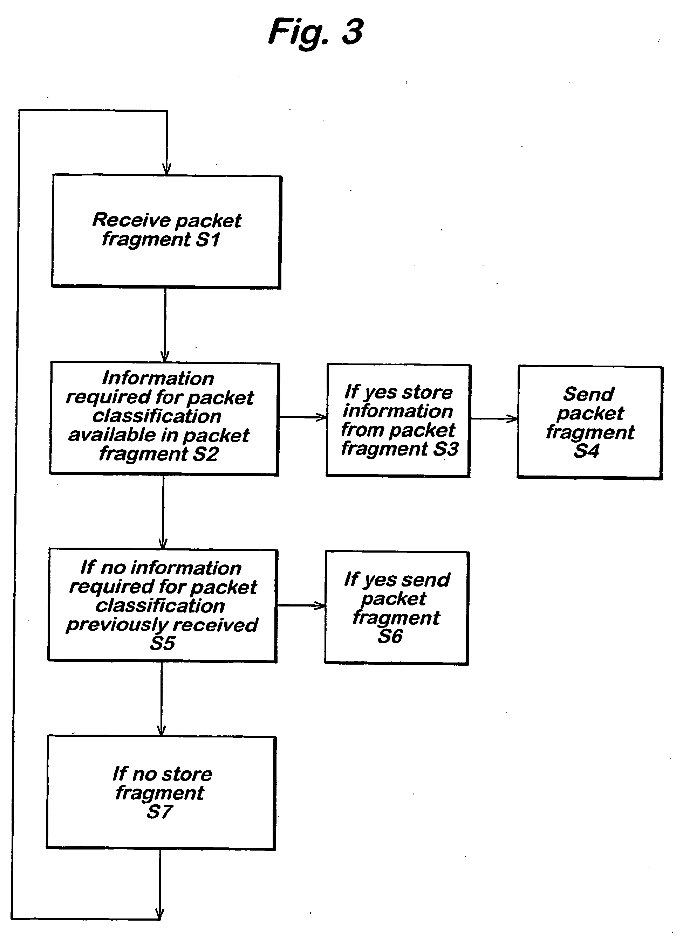

Figure 3 shows a flow diagram.

### Description of Preferred Embodiments of the Invention

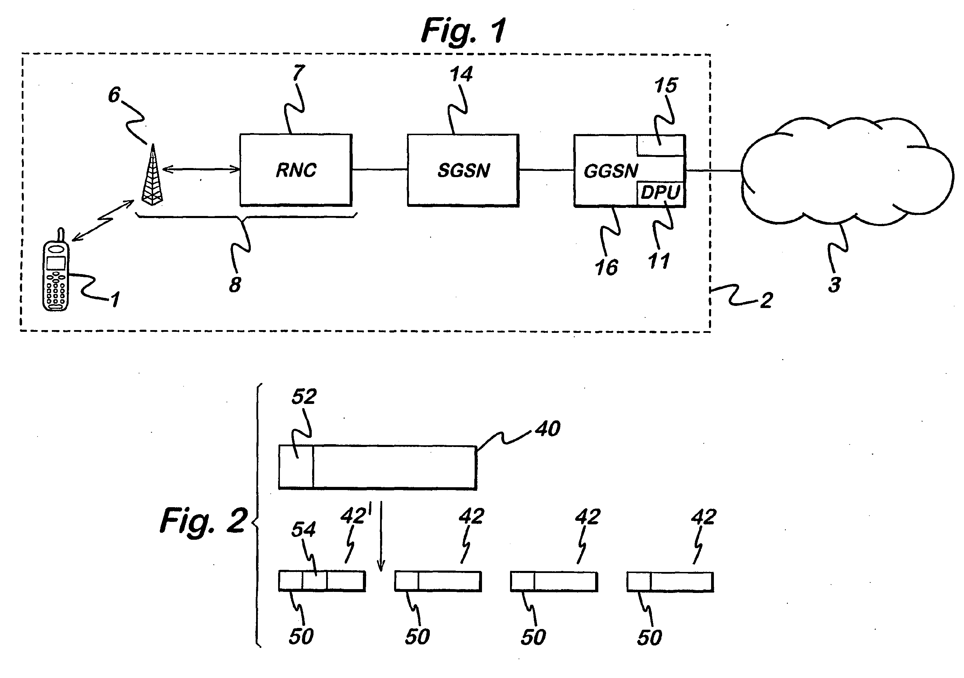

Reference is made to Figure 1 which shows a communication system in which the embodiments of the present invention may be employed. The system is capable of providing wireless packet switched services for a user 1 thereof. The area covered by the communication system may be divided into a plurality of cells or similar access entities (not shown). Each cell has associated therewith a base station 6. Depending on the standard being used by the network, the base station is sometimes referred to as node B, for example in the third generation standards. The term base station will be used in this document to encompass all elements which transmit to wireless stations or the like via the air interface. A mobile station 1 i.e. the wireless user equipment is arranged to communicate with the respective base station. It should be appreciated that the term mobile station is intended to cover any suitable type of wireless user equipment, such as portable data processing devices and web browsers.

The embodiment of the invention is described in the context of a UMTS (Universal Mobile Telecommunications System) and a GPRS (General Packet radio Service) and communications involving packet data. However, it should be appreciated that embodiments of the present invention are applicable to any other communication system which deals with packet data.

The elements of a UMTS network system 2 will now be discussed in more detail. The mobile station or user equipment 1 is arranged to communicate via the air interface with a respective base station 6. The base station is controlled by a radio network controller RNC 7. The radio network controller RNC and the base station may sometimes be referred to as the radio network subsystem RNS 8 or radio access network RAN. It should be appreciated that a UMTS network is typically provided with more than one RNC, and that each radio network controller is arranged generally to control more than one base station 6 although only one base station is shown in Figure 1. The elements of the RNS can be included in either or both of the RNC and the base station. This is an implementation issue. It is also possible to have a combined RNC and base station product. In this case, the elements of the RNS could be included in this combined product.

The radio network subsystem 8 may be connected to a SGSN (serving GPRS support node) 14. The SGSN 14 keeps track of the mobile station's location and performs security functions and access control. The functions of the SGSN are defined in more detail e.g. in the 3GPP specification 23.060. The SGSN 14 is connected to a GGSN (gateway GPRS support node) 16. The GGSN 16 provides interworking with an external packet switched network 3. In other words, the GGSN 16 acts as a gateway between the UMTS network 2 and the external data network 3, such as an IP based data network. The functions of a typical GGSN are also defined in the referenced 3GPP specification.

Although not shown, the network system 2 may also be connected to conventional telecommunication networks, such as to a GSM based cellular public land mobile network (PLMN) or to a public switched telephone network (PSTN). The various networks may be interconnected to each other via appropriate interfaces and/or gateways.

The following embodiment may be implemented in the GGSN 16 of Figure 1, and more precisely, by means of a data processing unit 11 of the GGSN. However, it should be appreciated that the embodiment may also be applied in other network nodes of the network 2 as well, such as in the SGSN 14 and the RNC 7. The embodiments may also be applied in the mobile station 1.

Embodiments of the present invention address the problems of packet classification for fragmented IP packets by the GGSN or similar node.

Reference is made to Figure 2 which shows an IP packet 40 which has been fragmented into a number of fragments 42. The original IP packet has an IP header 52. All the fragments have also an IP header 50 and may have additional IP level headers. The fragments 42 include information on the fragmentation. In case of IPv6 , a Fragment Header 50 is added to the IP packets resulting from fragmentation. The Fragment Header 50 includes e.g. Identification information which is the same in all the fragments (which also have the same source address and destination address). In case of IPv4 , this information is included in the IPv4 header. IPv6 Fragment Header is specified in RFC 2460 by IETF. IPv4 is specified in RFC 791 by IETF.

In the case of IPv6, only the sender is permitted to fragment an IPv6 packet. All the IPv6 packets resulting from the fragmentation include an IPv6 header including e.g. the source address and destination address of the IPv6 packet and possibly IP level headers which may have to be processed hop by hop, that is IP level headers which have to be processed by additional nodes along the path, not just by the destination node. Additionally as mentioned above all of the fragments include a Fragment Header with the following information: next header; fragment offset; M flag (M=1 means more fragments, M=0 means last fragment) and identification. The identification is the same in all IPv6 fragments related to a source address - destination address pair. IPv6 packets with the same source address, destination address and identification in the Fragment Header should be carried on the same PDP context.

In the case of IPv4, other nodes along the path are also allowed to perform fragmentation. If fragmentation is performed, the IPv4 header includes information on the fragmentation, e.g. identification which is the same for all fragments related to a source address - destination address pair. IPv4 packets with the same source address, destination address and identification should be carried on the same PDP context.

Usually, the GGSN 16 receives the fragment 42' including the information required for packet classification first. It is possible that only one of the fragments will include the information which is required for packet classification 54. This is the case e.g. if packet classification should be performed with transport layer information, e.g. with TCP or UDP port numbers. In this case, one of the TFTs or packet classifiers related to the primary or secondary PDP contexts includes transport layer information. In IP networks, it is, however, possible that the GGSN receives other fragments first, and the fragment including the required information arrives later. If the GGSN has to classify packets with information which is not available in all the fragments, the GGSN should wait until it receives the fragment with the required information. When this fragment has been received, the GGSN knows on which PDP context all the fragments with the same destination address, source address and identification information should be sent towards the UE.

The GGSN stores information, preferably from the IPv6 header and from the Fragment Header or from the IPv4 header, in a store 15 on the fragmentation together with PDP context information. In particular the GGSN stores the source address and identification information and uses the stored information to classify fragments to the right PDP context. As a minimum the GGSN stores the identification information from the fragment header. It should be noted that the destination address or part of it is checked by the GGSN as the PDP address at packet classification. If the fragment 42' including the required information does not arrive first, the GGSN has to buffer fragments until it receives the fragment including this information.

In abnormal cases, e.g. when the GGSN buffers overflow, the GGSN may have to either send the old fragments on the most suitable PDP context (e.g. on the PDP context not including TFT if it exists or on a PDP context with lowest QoS) or drop old fragments to release buffer space for newer fragments.

In other embodiments of the invention, the GGSN may limit the time of waiting of the fragment which includes information required for packet classification. If the time limit expires without the required fragment being received, the GGSN may send the received fragments on the most suitable PDP context (e.g. on the PDP context not including TFT if it exists or on a PDP context with lowest QoS) which the GGSN selects without the required fragment.

It is also possible that the GGSN drops fragments if it can not decide on which PDP context the fragments should be sent. If one of the fragments is dropped, the GGSN may drop also all the other related fragments. If any of the fragments is missing, the UE can not form the original packet. In this case, dropping all fragments by the GGSN if any of the fragments is dropped may save radio resources, because then unnecessary fragments are not sent over the radio to the UE.

It should be appreciated that the GGSN may be dealing with a number of different fragments intended for the same or different destination at the same time.

The method embodying the present invention will now be described. In step S1 a packet fragment is received. In step S2, it is checked to see if the packet fragment contains the information required for packet classification. If so, the next step is step S3 where information from the fragment is stored in association with PDP context information. That packet fragment may in step S4 be sent on the required PDP context.

If the packet fragment does not contain the information required for packet classification, a check is made in step S5 to see if the information has been previously received in a different packet fragment having the same source address, destination address and identification. If so the packet fragment is sent in step S6 on the required PDP context. If not the packet fragment is stored in the buffer in step S7. In step S3, a check is also made to see if there are any fragments in the buffer having the same source address, destination address and identification or the like which are waiting for the packet fragment with the information required for packet classification. If there are any such stored fragments, these are also sent on the required PDP context.

It should be appreciated that whilst embodiments of the present invention have been described in the context of packet fragments, embodiments of the present invention can be used with other packet entities such as related packets not all of which contain information identifying the required PDP context.

Preferred embodiments of the present invention have been described in relation to PDP addresses. It should be appreciated that embodiments of the present invention can be used with any other types of address.

It should be appreciated that whilst embodiments of the present invention have been described in relation to the third generation GPRS and/or UMTS, the embodiments of the present invention are applicable to any other appropriate standards.

The Logical connection may also sometimes be referred to as logical associations or bit pipes.

It is also noted herein that while the above describes exemplifying embodiments of the invention, there are several variations and modifications which may be made to the disclosed solution without departing from the scope of the present invention as defined in the appended claims.

## Claims

1. A method for directing packet fragments, said method comprising the steps of:
receiving a first packet fragment (42');
determining that the first packet fragment is part of a packet (40);
checking if the first packet fragment contains information (54) relating to the direction of said packet (40);
storing said information of fragment;
directing said first packet fragment in accordance with said information;
receiving a second packet fragment (42);
checking if the second packet fragment is part of the packet (40); and
forwarding said second packet fragment in accordance with said stored information (54).

2. A method as claimed in claim 1, wherein when said second packet fragment (42) is received before said first packet fragment (42') said second packet fragment (42) is stored until said first packet fragment (42') is received.

3. A method as claimed in claim 1 or 2, wherein said method is arranged to direct a packet fragment to a required bearer of a plurality of bearers.

4. A method as claimed in claim 3, wherein said checking step comprises checking if said packet fragment contains information relating to the required bearer.

5. A method of claim 4, wherein the information is at least one of a source address, destination address, and identification in a fragment header (50).

6. A method as claimed in any preceding claim, wherein the storing step comprises storing at least one of a source address, a destination address, and identification in a fragment header (50).

7. A method as claimed in claim 1 comprising the step of storing fragmentation related information contained in said packet fragment .

8. A method as claimed in any preceding claim, comprising the step of receiving another packet fragment after a packet fragment containing said direction information (54) has been received and directing said another packet fragment in accordance with the direction information (54).

9. A method for directing a first set of mutually related packet fragments, the first set containing a second set of mutually related packet fragments; the packet fragments of the second set containing information (54) relating to the direction of said packet fragments; the second set of packet fragments containing at least one packet fragment (42'),
said method comprising the steps of:
receiving at least one first packet fragment;
determining that the first packet fragment belongs to the first set of mutually related packet fragments;
determining that the first packet fragment does not belong to the second set of packet fragments;
receiving at least one second packet fragment;
determining that the second packet fragment received belongs to the second set of packet fragments; and
directing said first and second packet fragments in accordance with said information (54) contained in the second packet fragment.

10. A method according to claim 9, comprising storing the first packet fragment.

11. A method as claimed in any of claims 9 or 10, wherein said first packet fragment is stored until said required direction has been determined.

12. A method as claimed in any of claims 9 to 11, wherein when said first packet fragment has been stored for a predetermined time and said required direction has not been determined, a direction in which said first packet fragment is to be sent is selected and said first packet fragment is sent in said selected direction.

13. A method as claimed in any of claims 9 to 12, wherein when said first packet fragment has been stored for a predetermined time and said required direction has not been determined, said first pactet ragment is removed from a store (15).

14. A method as claimed in any of claims 9 to 13, wherein if a store (15) storing said first packet fragment has more than a predetermined amount of data stored therein, a direction in which said first packet fragment is to be sent is selected and said first packet fragment is sent in said selected direction.

15. A method as claimed in any of claims 9 to 14, wherein if a store (15) storing said first packet fragment has more than a predetermined amount of data stored therein said first packet fragment is removed from said store (15).

16. A method as claimed in any of claims 9 to 15, wherein information from a header (50) of at least one packet fragment is stored.

17. A method as claimed in claim 16, wherein said stored information comprises at least one of the following:
source address; destination address and identification information.

18. A method as claimed in any of claims 9 to 17, wherein said direction comprises a PDP context and/or one of a plurality of bearers and/or a bearer.

19. A method as claimed in any of claims 9 to 18, wherein said direction information comprises said destination address.

20. Apparatus for directing a plurality of related packet fragments, only one or some of said packet fragments containing information relating to the direction of said packet fragments, said apparatus comprising:
means for receiving said plurality of packet fragments;
means for determining a required direction address from at least one of said packet fragments containing said information; and
means for directing said plurality of related packet fragments in the required direction.

21. Apparatus as claimed in claim 20, wherein said apparatus is usable as a node in a packet switched network.

22. Apparatus as claimed in claim 21, wherein said network is a GPRS network.

23. Apparatus as claimed in any of claims 20 to 22, wherein said apparatus is a GGSN (16).

24. Apparatus for directing a first set of mutually related packet fragments, the first set containing a second set of mutually related packet fragments; the packet fragments of the second set containing information (54) relating to the direction of said packet fragments; the second set of packet fragments containing at least one packet fragment (42'), said apparatus comprising:
means for receiving at least one first packet fragment;
means for determining that the first packet fragment belongs to the first set of mutually related packet fragments;
means for determining that the first packet fragment does not belong to the second set of packet fragments;
means for receiving at least one second packet fragment;
means for determining that the second packet fragment received belongs to the second set of packet fragments; and
means for directing said first and second packet fragments in accordance with said information (54) contained in the second packet fragment.

## Patentansprüche

1. Verfahren zum Lenken von Paketfragmenten, wobei das Verfahren die Schritte umfasst:
Empfangen eines ersten Paketfragments (42');
Bestimmen, dass das erste Paketfragment ein Teil eines Pakets (40) ist;
Überprüfen, ob das erste Paketfragment Information (54) enthält, die sich auf die Richtung des Pakets (40) bezieht;
Speichern der Information des Fragments;
Lenken des ersten Paketfragments gemäß der Information;
Empfangen eines zweiten Paketfragments (42);
Überprüfen, ob das zweite Paketfragment Teil des Pakets (40) ist; und
Weiterleiten des zweiten Paketfragments gemäß der gespeicherten Information (54).

2. Verfahren gemäß Anspruch 1, wobei, wenn das zweite Paketfragment (42) vor dem ersten Paketfragment (42') empfangen wird, das zweite Paketfragment (42) gespeichert wird, bis das erste Paketfragment (42') empfangen wird.

3. Verfahren gemäß Anspruch 1 oder 2, wobei das Verfahren ausgelegt ist, um ein Paketfragment zu einem benötigten Träger einer Vielzahl von Trägern zu lenken.

4. Verfahren gemäß Anspruch 3, wobei der Überprüfungsschritt ein Überprüfen umfasst, ob das Paketfragment Information enthält, die sich auf den benötigten Träger bezieht.

5. Verfahren gemäß Anspruch 4, wobei die Information wenigstens eines ist aus einer Quelladresse, einer Zieladresse und einer Identifikation in einem Fragmentheader (50).

6. Verfahren gemäß einem der vorhergehenden Ansprüche, wobei der Speicherschritt ein Speichern wenigstens einer Quelladresse, einer Zieladresse und einer Identifikation in einem Fragmentheader (50) umfasst.

7. Verfahren gemäß Anspruch 1, welches den Schritt des Speicherns von auf Fragmentation bezogener Information umfasst, die in dem Paketfragment enthalten ist.

8. Verfahren gemäß einem der vorhergehenden Ansprüche, welches den Schritt umfasst des Empfangens eines weiteren Paketfragments, nachdem ein Paketfragment, das die Richtungsinformation (54) enthält, empfangen wurde und Lenken des weiteren Paketfragments gemäß der Richtungsinformation (54).

9. Verfahren zum Lenken eines ersten Satzes von gegenseitig in Beziehung stehenden Paketfragmente, wobei der erste Satz einen zweiten Satz von gegenseitig in Beziehung stehenden Paketfragmenten enthält; wobei die Paketfragmente des zweiten Satzes Information (54) enthalten, die sich auf die Richtung der Paketfragmente bezieht; wobei der zweite Satz von Paketfragmenten wenigstens ein Paketfragment (42') enthält,
wobei das Verfahren die Schritte umfasst:
Empfangen wenigstens eines ersten Paketfragments;
Bestimmen, dass das erste Paketfragment zum ersten Satz von gegenseitig in Beziehung stehenden Paketfragmenten gehört;
Bestimmen, dass das erste Paketfragment nicht zum zweiten Satz von Paketfragmenten gehört;
Empfangen wenigstens eines zweiten Paketfragments;
Bestimmen, dass das zweite Paketfragment, das empfangen wurde, zum zweiten Satz von Paketfragmenten gehört; und
Lenken des ersten und zweiten Paketfragments gemäß der Information (54), die in dem zweiten Paketfragment enthalten ist.

10. Verfahren gemäß Anspruch 9, welches ein Speichern des ersten Paketfragments umfasst.

11. Verfahren gemäß einem der Ansprüche 9 oder 10, wobei das erste Paketfragment gespeichert wird, bis die benötigte Richtung bestimmt worden ist.

12. Verfahren gemäß einem der Ansprüche 9 bis 11, wobei, wenn das erste Paketfragment für eine vorbestimmte Zeit gespeichert worden ist und die benötigte Richtung nicht bestimmt worden ist, eine Richtung ausgewählt wird, in die das erste Paketfragment gesendet werden soll und das erste Paketfragment in die ausgewählte Richtung gesendet wird.

13. Verfahren gemäß einem der Ansprüche 9 bis 12, wobei, wenn das erste Paketfragment für eine vorbestimmte Zeit gespeichert worden ist und die benötigte Richtung nicht bestimmt worden ist, das erste Paketfragment aus einem Speicher (15) entfernt wird.

14. Verfahren gemäß einem der Ansprüche 9 bis 13, wobei, falls ein Speicher (15), der das erste Paketfragment speichert, mehr als eine vorbestimmte Menge von Daten darin gespeichert hat, wird eine Richtung ausgewählt, in die das erste Paketfragment gesendet werden soll und das erste Paketfragment wird in die ausgewählte Richtung gesendet.

15. Verfahren gemäß einem der Ansprüche 9 bis 14, wobei, falls ein Speicher (15), der das erste Paketfragment speichert, mehr als eine vorbestimmte Menge von Daten darin gespeichert hat, das erste Paketfragment aus dem Speicher (15) entfernt wird.

16. Verfahren gemäß einem der Ansprüche 9 bis 15, wobei Information aus einem Header (50) wenigstens eines Paketfragments gespeichert wird.

17. Verfahren gemäß Anspruch 16, wobei die gespeicherte Information wenigstens eine der folgenden umfasst:
Quelladresse; Zieladresse und Identifikationsinformation.

18. Verfahren gemäß einem der Ansprüche 9 bis 17, wobei die Richtung einen PDP-Kontext und/oder einen aus einer Vielzahl von Trägern und/oder einen Träger umfasst.

19. Verfahren gemäß einem der Ansprüche 9 bis 18, wobei die Richtungsinformation die Zieladresse umfasst.

20. Vorrichtung zum Lenken einer Vielzahl von in Beziehung stehenden Paketfragmenten, wobei nur eines oder einige der Paketfragmente Information enthält, die sich auf die Richtung der Paketfragmente bezieht, wobei die Vorrichtung umfasst:
Mittel zum Empfangen der Vielzahl von Paketfragmenten;
Mittel zum Bestimmen einer benötigten Richtungsadresse aus wenigstens einem der Paketfragmente, die die Information enthalten; und
Mittel zum Lenken der Vielzahl von in Beziehung stehenden Paketfragmenten in die benötigte Richtung.

21. Vorrichtung gemäß Anspruch 20, wobei die Vorrichtung als ein Knoten in einem paketvermittelten Netz verwendbar ist.

22. Vorrichtung gemäß Anspruch 21, wobei das Netz ein GPRS-Netz ist.

23. Vorrichtung gemäß einem der Ansprüche 20 bis 22, wobei die Vorrichtung ein GGSN (16) ist.

24. Vorrichtung zum Lenken eines ersten Satzes von gegenseitig in Beziehung stehenden Paketfragmenten, wobei der erste Satz einen zweiten Satz von gegenseitig in Beziehung stehenden Paketfragmenten enthält; wobei die Paketfragmente des zweiten Satzes Information (54) enthalten, die sich auf die Richtung der Paketfragmente bezieht; wobei der zweite Satz von Paketfragmenten wenigstens ein Paketfragment (42') enthält, wobei die Vorrichtung umfasst:
Mittel zum Empfangen wenigstens eines ersten Paketfragments;
Mittel zum Bestimmen, dass das erste Paketfragment zum ersten Satz von gegenseitig in Beziehung stehenden Paketfragmenten gehört;
Mittel zum Bestimmen, dass das erste Paketfragment nicht zum zweiten Satz von Paketfragmenten gehört;
Mittel zum Empfangen wenigstens eines zweiten Paketfragments;
Mittel zum Bestimmen, dass das zweite Paketfragment, das empfangen wurde, zum zweiten Satz von Paketfragmenten gehört; und
Mittel zum Lenken des ersten und zweiten Paketfragments gemäß der Information (54), die in dem zweiten Paketfragment enthalten ist.

## Revendications

1. Procédé d'orientation de fragments de paquet, ledit procédé comprenant les étapes consistant à :
recevoir un premier fragment de paquet (42') ;
déterminer si le premier fragment de paquet fait partie d'un paquet (40) ;
vérifier si le premier fragment de paquet contient des informations (54) relatives à l'orientation dudit paquet (40) ;
mémoriser lesdites informations de fragment ;
orienter ledit premier fragment de paquet conformément auxdites informations ;
recevoir un deuxième fragment de paquet (42) ;
vérifier si le deuxième fragment de paquet fait partie du paquet (40) ; et
transférer ledit deuxième fragment de paquet conformément auxdites informations mémorisées (54).

2. Procédé selon la revendication 1, dans lequel, lorsque ledit deuxième fragment de paquet (42) est reçu avant ledit premier fragment de paquet (42'), ledit deuxième fragment de paquet (42) est mémorisé jusqu'à ce que ledit premier fragment de paquet (42') soit reçu.

3. Procédé selon la revendication 1 ou 2, dans lequel ledit procédé est configuré pour orienter un fragment de paquet vers un porteur requis parmi une pluralité de porteurs.

4. Procédé selon la revendication 3, dans lequel ladite étape de vérification comprend l'étape consistant à vérifier si ledit fragment de paquet contient des informations relatives au porteur requis.

5. Procédé selon la revendication 4, dans lequel les informations sont au moins un des éléments suivants : une adresse source, une adresse de destination et une identification dans un en-tête de fragment (50).

6. Procédé selon l'une quelconque des revendications précédentes, dans lequel l'étape de mémorisation comprend la mémorisation d'au moins un des éléments suivants : une adresse source, une adresse de destination, et une identification dans un en-tête de fragment (50).

7. Procédé selon la revendication 1 comprenant l'étape consistant à mémoriser des informations relatives à la fragmentation contenues dans ledit fragment de paquet.

8. Procédé selon l'une quelconque des revendications précédentes, comprenant l'étape consistant à recevoir un autre fragment de paquet après qu'un fragment de paquet contenant lesdites informations d'orientation (54) a été reçu et orienter ledit autre fragment de paquet conformément aux informations d'orientation (54).

9. Procédé d'orientation d'un premier ensemble de fragments de paquet liés mutuellement, le premier ensemble contenant un deuxième ensemble de fragments de paquet liés mutuellement ; les fragments de paquet du deuxième ensemble contenant des informations (54) relatives à l'orientation desdits fragments de paquet ; le deuxième ensemble de fragments de paquet contenant au moins un fragment de paquet (42'),
ledit procédé comprenant les étapes consistant à :
recevoir au moins un premier fragment de paquet ;
déterminer si le premier fragment de paquet appartient au premier ensemble de fragments de paquet liés mutuellement ;
déterminer si le premier fragment de paquet n'appartient pas au deuxième ensemble de fragments de paquet ;
recevoir au moins un deuxième fragment de paquet ;
déterminer si le deuxième fragment de paquet reçu appartient au deuxième ensemble de fragments de paquet ; et
orienter lesdits premier et deuxième fragments de paquet conformément auxdites informations (54) contenues dans le deuxième fragment de paquet.

10. Procédé selon la revendication 9, comprenant la mémorisation du premier fragment de paquet.

11. Procédé selon l'une quelconque des revendications 9 ou 10, dans lequel ledit premier fragment de paquet est mémorisé jusqu'à ce que ladite orientation requise ait été déterminée.

12. Procédé selon l'une quelconque des revendications 9 à 11, dans lequel lorsque ledit premier fragment de paquet a été mémorisé pendant une période prédéterminée et ladite orientation requise n'a pas été déterminée, une orientation vers laquelle ledit premier fragment de paquet doit être envoyé est sélectionnée et ledit premier fragment de paquet est envoyé vers ladite orientation sélectionnée.

13. Procédé selon l'une quelconque des revendications 9 à 12, dans lequel lorsque ledit premier fragment de paquet a été mémorisé pendant une période prédéterminée et ladite orientation requise n'a pas été déterminée, ledit premier fragment de paquet est supprimé d'une mémoire (15).

14. Procédé selon l'une quelconque des revendications 9 à 13, dans lequel si une mémoire (15) mémorisant ledit premier fragment de paquet contient plus d'une quantité prédéterminée de données mémorisées dans celle-ci, une orientation vers laquelle ledit premier fragment de paquet doit être envoyé est sélectionnée et ledit premier fragment de paquet est envoyé vers ladite orientation sélectionnée.

15. Procédé selon l'une quelconque des revendications 9 à 14, dans lequel si une mémoire (15) mémorisant ledit premier fragment de paquet contient plus d'une quantité prédéterminée de données mémorisées dans celle-ci ledit premier fragment de paquet est supprimé de ladite mémoire (15).

16. Procédé selon l'une quelconque des revendications 9 à 15, dans lequel les informations provenant d'un en-tête (50) d'au moins un fragment de paquet sont mémorisées.

17. Procédé selon la revendication 16, dans lequel lesdites informations mémorisées comprennent au moins l'un des éléments suivants :
une adresse source ; une adresse de destination et des informations d'identification.

18. Procédé selon l'une quelconque des revendications 9 à 17, dans lequel ladite orientation comprend un contexte PDP et/ou un porteur parmi une pluralité de porteurs et/ou un porteur.

19. Procédé selon l'une quelconque des revendications 9 à 18, dans lequel lesdites informations d'orientation comprennent ladite adresse de destination.

20. Appareil pour orienter une pluralité de fragments de paquet liés, uniquement un ou quelques-uns desdits fragments de paquet contenant des informations relatives à l'orientation desdits fragments de paquet, ledit appareil comprenant :
des moyens pour recevoir ladite pluralité de fragments de paquet ;
des moyens pour déterminer une adresse d'orientation requise à partir d'au moins un desdits fragments de paquet contenant lesdites informations ; et
des moyens pour orienter ladite pluralité de fragments de paquet liés vers l'orientation requise.

21. Appareil selon la revendication 20, dans lequel ledit appareil peut être utilisé en tant que noeud dans un réseau à commutation par paquets.

22. Appareil selon la revendication 21, dans lequel ledit réseau est un réseau GPRS.

23. Appareil selon l'une quelconque des revendications 20 à 22, dans lequel ledit appareil est un GGSN (16).

24. Appareil pour orienter un premier ensemble de fragments de paquet liés mutuellement, le premier ensemble contenant un deuxième ensemble de fragments de paquet liés mutuellement ; les fragments de paquet du deuxième ensemble contenant des informations (54) relatives à l'orientation desdits fragments de paquet ; le deuxième ensemble de fragments de paquet contenant au moins un fragment de paquet (42'), ledit appareil comprenant ;
des moyens pour recevoir au moins un premier fragment de paquet ;
des moyens pour déterminer si le premier fragment de paquet appartient au premier ensemble de fragments de paquet liés mutuellement ;
des moyens pour déterminer si le premier fragment de paquet n'appartient pas au deuxième ensemble de fragments de paquet ;
des moyens pour recevoir au moins un deuxième fragment de paquet ;
des moyens pour déterminer si le deuxième fragment de paquet reçu appartient au deuxième ensemble de fragments de paquets ; et
des moyens pour orienter lesdits premier et deuxième fragments de paquet conformément auxdites informations (54) contenues dans le deuxième fragment de paquet.
